# EUROPÄISCHE PATENTSCHRIFT

(11) **EP 3 564 449 B1**
(45) Veröffentlichungstag und Bekanntmachung des Hinweises auf die Patenterteilung: **15.02.2023**
(21) Anmeldenummer: 19170256.2
(22) Anmeldetag: 18.04.2019
(51) Int. Cl.: E02F 9/22, F02D 41/02, F01N 9/00, F04B 17/05, B60K 11/02

(54) **ARBEITSFAHRZEUG MIT EINEM HYDRAULIKKREISLAUF MIT BEDARFSWEISE AKTIVIERBAREM STRÖMUNGSWIDERSTAND**
WORK VEHICLE WITH A HYDRAULIC CIRCUIT WITH RESISTANCE THAT CAN BE ACTIVATED WHEN NEEDED
VÉHICULE DE TRAVAIL À CIRCUIT HYDRAULIQUE À RÉSISTANCE À L'ÉCOULEMENT POUVANT ÊTRE ACTIVÉE EN FONCTION DES BESOINS

(30) Priorität: 20.04.2018 DE 102018109568
(43) Veröffentlichungstag der Anmeldung: 06.11.2019
(73) Patentinhaber: Wacker Neuson Linz GmbH, 4063 Hörsching (AT)
(72) Erfinder: Farthofer, Dieter, 4052 Ansfelden (AT); Rohatsch, Stefan, 4540 Bad Hall (AT); Mahringer, Stephan, 4113 Sankt Martin im Mühlkreis (AT); Pfefferkorn, Alexander, 94086 Bad Griesbach (DE)
(74) Vertreter: Müller Hoffmann & Partner

(56) Entgegenhaltungen:
- DE-A1- 3 143 232
- JP-A- 2011 163 166
- US-A1- 2011 000 197
- US-B2- 8 905 321

## Beschreibung

Die Erfindung betrifft ein Arbeitsfahrzeug, wie beispielsweise einen Radlader, einen Bagger, einen Lader oder einen Dumper.

Solche Arbeitsfahrzeuge weisen als Hauptantrieb üblicherweise eine Brennkraftmaschine auf, wie beispielsweise einen Dieselmotor. Bei Brennkraftmaschinen im Allgemeinen und bei Dieselmotoren im Speziellen stellt sich das Problem, dass die Brennkraftmaschine bei kalten Umgebungstemperaturen im Leerlauf nicht genügend warm wird, um eine ausreichende Abgasreinigung zu gewährleisten. Beispielsweise kann bei einem zu wenig warmem Dieselmotor und damit unzureichend heißen Abgasen keine Regeneration eines Partikelfilters gestartet werden, wodurch sich die Gefahr erhöht, dass der Partikelfilter schneller verstopft und ausgetauscht werden muss.

Diese Problematik wird bei geringen Umgebungstemperaturen noch dadurch verschärft, dass durch eine eingeschaltete Heizung für eine Kabine des Arbeitsfahrzeugs dem Kühlmittelkreislauf der Brennkraftmaschine zusätzlich Wärme entzogen wird. Weiter ist zu berücksichtigen, dass ein Dieselmotor im Leerlauf bei geringen Umgebungstemperaturen nicht ausreichend Wärme erzeugt, um mittels des Kühlwasserkreislaufs die Kabine des Arbeitsfahrzeugs heizen zu können.

Schließlich besteht bei geringen Umgebungstemperaturen auch das Problem dass die im unbelasteten Hydraulikkreislauf zirkulierende Hydraulikflüssigkeit (Hydrauliköl) nicht ausreichend erwärmt werden kann.

Sowohl das Problem der Kabinenheizung als auch das Problem der Erwärmung des Hydraulikkreislaufs kann beispielsweise mittels elektrischer Zusatzheizungen gelöst werden. Allerdings benötigen derartige Zusatzheizungen zusätzlichen Bauraum und deren Leistungsaufnahme muss unter Berücksichtigung eines Batterieladezustands dauernd überwacht werden.

Aus der US 2011/0000197 A1 ist eine Arbeitsmaschine bekannt, bei der Hydraulikfluid statt über den eigentlichen Hydraulikkreislauf und die mithilfe des Hydraulikkreislaufs angetriebene Arbeitsvorrichtung zeitweilig über einen Hilfskreislauf führbar ist, um dort Wärme durch Durchströmen eines Drosselventils zu erzeugen.

Eine ähnliche Anordnung ist aus der US 8,905,321 B2 bekannt.

Die der Erfindung zu Grunde liegende Aufgabe ist es, ein Arbeitsfahrzeug anzugeben, bei dem die obigen Nachteile ohne Einsatz von elektrischen Zusatzheizungen vermieden werden können sowie ein Verfahren zum Betreiben eines solchen Arbeitsfahrzeugs.

Diese Aufgabe wird gelöst durch den Gegenstand der unabhängigen Ansprüche.

Vorteilhafte Ausgestaltungen mit zweckmäßigen Weiterbildungen sind in den abhängigen Ansprüchen angegeben.

Es wird ein Arbeitsfahrzeug vorgeschlagen mit einer Brennkraftmaschine zum Antreiben des Arbeitsfahrzeugs, einem Hydraulikkreislauf mit einer Hydraulikpumpe, wobei die Hydraulikpumpe mit der Brennkraftmaschine koppelbar oder gekoppelt ist, so dass die Hydraulikpumpe durch die Brennkraftmaschine angetrieben ist, und einer hydraulisch angetriebenen Arbeitsvorrichtung, die mit dem Hydraulikkreislauf mittels einer Arbeitsventilanordnung verbunden ist. Dabei soll in dem Hydraulikkreislauf ein bedarfsweise aktivierbarer Strömungswiderstand angeordnet sein.

Bei deaktiviertem Strömungswiderstand wird üblicherweise die Hydraulikflüssigkeit (Hydrauliköl) durch die Hydraulikpumpe mit geringem Gegendruck im Kreis gepumpt. Die Hydraulikpumpe wird dabei direkt durch die Brennkraftmaschine, beispielsweise den Dieselmotor, angetrieben. Wird im Hydraulikkreislauf ein Strömungswiderstand aktiviert, muss die gesamte Hydraulikflüssigkeitsmenge diesen Strömungswiderstand passieren. Entsprechend hat die Hydraulikpumpe einen größeren Widerstand zu überwinden, der einen erhöhten Druck bewirkt. Der Strömungswiderstand kann deshalb auch als druckerhöhender Widerstand bezeichnet werden. Unter der Berücksichtigung, dass die hydraulische Leistung aus dem Produkt von Druck und Volumenstrom gebildet wird, muss der die Hydraulikpumpe antreibende Dieselmotor mehr Leistung erzeugen. Entsprechend wird die Brennkraftmaschine (Dieselmotor) schneller warm. Dies ermöglicht einen erhöhten Wärmeeintrag in den Kühlwasserkreislauf der Brennkraftmaschine. Der hydraulische Leistungsverlust wird von der Hydraulikflüssigkeit in Form einer Temperaturerhöhung gespeichert.

Entsprechend kann durch Bereitstellen eines bedarfsweise aktivierbaren Strömungswiderstands auf einfache Weise mehr Leistung von der Brennkraftmaschine angefordert werden, so dass einerseits das Heizen der Kabine mittels des Kühlwasserkreislaufs verbessert und andererseits eine optimierte Abgasreinigung ermöglicht werden kann, insbesondere bei temperaturabhängigen Abgasnachbehandlungssystemen, wie z.B. Katalysatoren oder Dieselpartikelfiltern.

Der Strömungswiderstand weist einen Blende auf. Die Blende ist ein Strömungswiderstand, der den Leitungsquerschnitt sprungartig verengt. Im einfachsten Fall kann die Blende als aufgebohrte Scheibe (Festblende) ausgebildet sein.

Das Verhältnis aus Länge und Leitungsdurchmesser kann bei der Blende verhältnismäßig gering gewählt sein. Beispielsweise kann das Verhältnis der Länge der Blende zum Leitungsdurchmesser kleiner als etwa 1,5 betragen.

In dem Hydraulikkreislauf ist ein 2/2-Wegeventil angeordnet, das in seiner ersten Schaltstellung die Hydraulikflüssigkeit an dem Strömungswiderstand vorbei leitet und das in seiner zweiten Schaltstellung die Hydraulikflüssigkeit zum Strömungswiderstand leitet. Dabei kann das 2/2-Wegeventil ein elektromagnetisch betätigbares Ventil sein, das in seine erste Schaltstellung federvorgespannt ist.

In seiner ersten Schaltstellung, die auch als Grundstellung bezeichnet werden kann, ermöglicht das 2/2-Wegeventil somit einen ungehinderten Durchfluss bzw. eine ungehinderte Zirkulation von Hydraulikflüssigkeit im Hydraulikkreis. Wird das 2/2-Wegeventil in seine zweite Schaltstellung gebracht, wird die Hydraulikflüssigkeit zum Strömungswiderstand bzw. zur Blende geleitet, so dass stromaufwärts von der Blende die Hydraulikpumpe gegen einen erhöhten Gegendruck arbeiten muss.

Der Strömungswiderstand kann stromabwärts von der Arbeitsvorrichtung angeordnet sein. Bei einer Variante kann es auch sinnvoll sein, den Strömungswiderstand stromaufwärts von der Arbeitsvorrichtung anzuordnen.

Das Arbeitsfahrzeug kann eine Steuereinheit aufweisen, die dazu eingerichtet ist, in Abhängigkeit von einem oder mehreren erfassten Kennwerten den Strömungswiderstand zu aktivieren oder zu deaktivieren.

Ein erster Kennwert kann ein vom Betrieb der Brennkraftmaschine abhängiger Kraftmaschinenparameter sein. Hier wird beispielsweise an einen Kraftmaschinenparameter gedacht, der für eine Regenerationsanforderung für den Partikelfilter steht. Wird also beispielsweise durch die Steuereinheit ein Flag gesetzt, dass die Reinigung des Partikelfilters erforderlich sei, wofür die Brennkraftmaschine (Dieselmotor) mit höherer Leistung betrieben werden muss, kann der Strömungswiderstand aktiviert werden. Ein anderer Kraftmaschinenparameter kann die Temperatur im Kühlmittelkreislauf bzw. ein zugehöriger Grenzwert sein. Wird eine gewisse Temperatur im Kühlmittelkreislauf unterschritten, kann der Strömungswiderstand aktiviert werden, so dass die Brennkraftmaschine mehr leisten muss und die Kühlmitteltemperatur wieder erhöht wird.

Ein zweiter Kennwert kann ein vom Betrieb des Hydraulikkreislaufs abhängiger Kreislaufparameter sein. Hier wird beispielsweise daran gedacht, dass die Temperatur der Hydraulikflüssigkeit (Hydrauliköl) erfasst wird. Unterschreitet die Temperatur des Hydrauliköls einen Grenzwert, wird der Strömungswiderstand aktiviert, so dass die die Temperatur des Hydrauliköls wieder erhöht werden kann.

Ein dritter Kennwert kann ein allgemeiner Betriebsparameter sein, der unabhängig vom Betrieb der Brennkraftmaschine oder des Hydraulikkreislaufs erfassbar ist. Hier wird beispielsweise an die Umgebungstemperatur gedacht, wobei der Strömungswiderstand aktiviert wird, wenn die Umgebungstemperatur einen bestimmten Grenzwert unterschreitet. Ein anderer, vom eigentlichen Betrieb der Brennkraftmaschine unabhängiger Kennwert kann darüber Auskunft geben, ob die Kabinenheizung eingeschaltet oder ausgeschaltet ist.

Es wird darauf hingewiesen, dass die oben erwähnten Kennwerte rein beispielhaft sind. Ferner kann die Aktivierung bzw. Deaktivierung des Strömungswiderstands von einem Kennwert alleine oder von einer beliebigen Kombination von Kennwerten abhängig sein. Dabei können sich verschiedene Kennwerte auch bedingen, was aber nicht zwingend ist. Neben den oben erwähnten Beispielen für mögliche Kennwerte können noch weitere, hier nicht erwähnte Kennwerte einfließen, die der Steuereinheit zur Verfügung gestellt werden können.

Die Steuereinheit kann dazu eingerichtet sein, den Strömungswiderstand zu deaktivieren, wenn das Arbeitsfahrzeug fährt oder/und wenn die Arbeitsvorrichtung in Betrieb ist. In solchen Zuständen soll die Brennkraftmaschine ihre Leistung für den Antrieb des Arbeitsfahrzeugs oder für den Betrieb der Arbeitsvorrichtung, wie beispielsweise einer Baggerschaufel, einer Kippmulde oder dergleichen, voll zur Verfügung stellen können.

Die Erfindung betrifft auch ein Verfahren zum Betreiben eines oben beschriebenen Arbeitsfahrzeugs mit folgenden Schritten:
- Erfassen des Fahrzustands des Arbeitsfahrzeugs;
- Erfassen des Betriebszustands der Arbeitsvorrichtung;
- Erfassen von einem oder mehreren Kennwerten;
- Aktivieren oder Deaktivieren des Strömungswiderstands in Abhängigkeit von dem erfassten Fahrzustand oder/und dem erfassten Betriebszustand oder/und einem erfassten Kennwert.

Bei dem Verfahren kann zunächst erfasst werden, ob das Arbeitsfahrzeug am Fahren ist oder sich im Stillstand befindet. Ferner kann gleichzeitig oder zeitversetzt erfasst werden, ob die Arbeitsvorrichtung, wie beispielswiese Baggerschaufel, Kippmulde oder dergleichen, aktuell in einer Ruhestellung ist oder sich in einer Betriebsstellung befindet. In einer Betriebsstellung der Arbeitsvorrichtung wird im Hydraulikkreislauf die Hydraulikflüssigkeit zu entsprechenden Hydraulikzylindern geleitet, welche die Arbeitsvorrichtung betätigen, wobei in der Ruhestellung die Hydraulikflüssigkeit im Hydraulikkreislauf mit geringem Druck im Kreis gepumpt wird. Weiter kann zeitgleich oder zeitversetzt oder/und in Abhängigkeit des Fahrzustands bzw. in Abhängigkeit des Betriebszustands der Arbeitsvorrichtung mindestens ein Kennwert erfasst werden. Auf Grundlage von einem oder mehreren erfassten Kennwerten oder/und auf Grundlage des Fahrzustandes bzw. des Betriebszustandes der Arbeitsvorrichtung kann dann entschieden werden, ob der Strömungswiderstand aktiviert werden soll oder nicht. Die erwähnten Verfahrensschritte können einzeln oder im Kombination wiederholt ausgeführt werden.

Weitere optionale Verfahrensschritte lassen sich aus den oben bereits vorrichtungsmäßig beschriebenen Merkmalen ableiten, beispielsweise die Verwendung von bestimmten Kennwerten bzw. Parametern.

Weitere Vorteile, Merkmale und Einzelheiten der Erfindung ergeben sich aus der nachfolgenden Beschreibung einer beispielhaften Ausführungsform sowie anhand der Zeichnungen. Dabei zeigen
- **Fig. 1**: in einer vereinfachten schematischen Darstellung ein Arbeitsfahrzeug; und
- **Fig. 2**: in einer vereinfachten schematischen Darstellung einen Hydraulikkreislauf für ein Arbeitsfahrzeug.

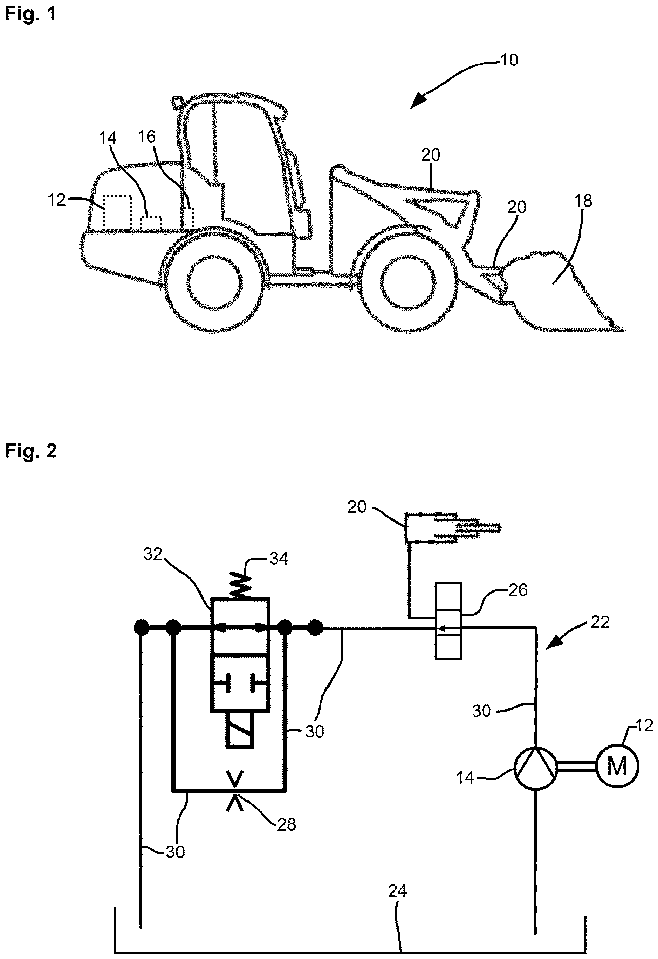

In Figur 1 ist schematisch und vereinfacht ein Arbeitsfahrzeug 10 dargestellt. Rein beispielhaft ist das Arbeitsfahrzeug 10 als Radlader gezeigt. Bei dem Arbeitsfahrzeug 10 kann es sich aber auch um andere Fahrzeuge handeln wie beispielsweise Rad- oder Raupenbagger, Teleskoplader, Rad- oder Kettendumper.

Das Arbeitsfahrzeug 10 umfasst eine schematisch angedeutete Brennkraftmaschine 12, beispielsweise einen Dieselmotor. Ferner sind in dem Arbeitsfahrzeug 10 eine Hydraulikpumpe 14 und eine Steuereinheit 16 vorgesehen. Die Hydraulikpumpe 14 ist Teil eines in Figur 1 nicht näher dargestellten Hydraulikkreises. Die Steuereinheit 16 kann eine für das Motormanagement der Brennkraftmaschine 12, die Steuerung der Hydraulik und die Steuerung sonstiger Fahrzeugkomponenten eingerichtete Rechnereinheit sein.

Das Arbeitsfahrzeug 10 weist ein Arbeitswerkzeug 18 auf. Das Arbeitswerkzeug 18 wird mittels einem oder mehreren Hydraulikzylinder 20 hydraulisch betätigt. Im vorliegenden Beispiel ist das Arbeitswerkzeug 18 eine Ladeschaufel. Das Arbeitswerkzeug 18 kann je nach Arbeitsfahrzeug auch ein anderes sein, wie etwa Baggerschaufel oder Kippmulde.

Figur 2 zeigt einen vereinfachten schematischen Hydraulikkreislauf 22 für ein Arbeitsfahrzeug 10. Der Hydraulikkreislauf 22 umfasst einen Speicher 24 für Hydraulikflüssigkeit (Hydrauliköl) und die Hydraulikpumpe 14. Die Hydraulikpumpe 14 kann beispielsweise eine Zahnradpumpe oder Verstellpumpe sein. Wie aus der Darstellung ersichtlich, ist die Hydraulikpumpe 14 mit der Brennkraftmaschine 12 bzw. dem Dieselmotor der Arbeitsmaschine 10 verbunden und wird durch diese(n) angetrieben.

Beispielhaft ist in dem Hydraulikkreislauf 22 eine Arbeitsventilanordnung 26 dargestellt, die mit einem Hydraulikzylinder 20 des Arbeitswerkzeugs in Verbindung steht. In welcher Weise die Arbeitsventilanordnung 26 ausgeführt ist, d.h. wieviel Anschlüsse und Schaltstellungen mittels der Arbeitsventilanordnung 26 bereitgestellt werden, hängt von den Funktionen der anzutreibenden Arbeitsvorrichtung 20 ab, was hier aber nicht näher erläutert wird.

In einer Stellung der Arbeitsventilanordnung 26, in der sich das Arbeitswerkzeug 18 in seiner Ruhestellung befindet, beispielsweise bei vollständig eingefahrenem Hydraulikzylinder 20, kann Hydraulikflüssigkeit mittels der Pumpe 14 einfach durch die Arbeitsventilanordnung 26 gepumpt werden, ohne den Hydraulikzylinder 20 zu beaufschlagen. Dieser Zustand ist in der Figur 2 durch den Pfeil in der Arbeitsventilanordnung 26 angedeutet. Es wird darauf hingewiesen, dass die Arbeitsventilanordnung 26 rein beispielhaft ist und dass je nach Anzahl und Ausgestaltung von Arbeitswerkzeugen auch weitere Arbeitsventilanordnungen im Hydraulikkreislauf 22 vorgesehen sein können.

Der Hydraulikkreislauf 22 umfasst einen bedarfsweise aktivierbaren Strömungswiderstand 28. Der Strömungswiderstand 28 ist im gezeigten Ausführungsbeispiel stromabwärts von der Arbeitsventilanordnung 26 bzw. der Arbeitsvorrichtung 18 angeordnet. Der bedarfsweise aktivierbare Strömungswiderstand 28 kann also im Hydraulikkreislauf 22 eine letzte Komponente vor dem Speicher 24 für Hydraulikflüssigkeit sein.

Ebenso ist es auch möglich, den Strömungswiderstand 28 stromaufwärts von der Arbeitsventilanordnung 26 bzw. der Arbeitsvorrichtung 18 anzuordnen. Versuche haben gezeigt, dass der am Strömungswiderstand 28 entstehende Rückstau und die damit verbundene Druckerhöhung stromaufwärts positionierte Arbeitsventilanordnungen 26 beeinflussen können, was durch die Anordnung des Strömungswiderstands stromauf von der Arbeitsventilanordnung 26 bzw. der Arbeitsvorrichtung 18 vermieden werden kann.

Der Strömungswiderstand 28 ist im dargestellten Beispiel als Blende ausgeführt. Die Blende weist einen festen Durchmesser auf, der geringer ist als der Durchmesser der stromaufwärts und stromabwärts angeordneten Hydraulikleitungen 30.

Wie bereits erwähnt, ist der Strömungswiderstand 28 bedarfsweise aktivierbar bzw. deaktivierbar. Hierzu wird ein 2/2-Wegeventil 32 eingesetzt. Das 2/2-Wegeventil 32 kann als elektromagnetisch betätigbares Ventil ausgeführt sein. Üblicherweise ist das 2/2-Wegeventil 32 mittels einer Feder 34 in einer ersten Stellung (Durchflussstellung bzw. Grundstellung) gehalten, in der die Hydraulikflüssigkeit an dem Strömungswiderstand 28 vorbeigeleitet wird. Soll der Strömungswiderstand 28 aktiviert werden, wird das Ventil 32 in eine zweite Stellung (Sperrstellung) umgeschaltet, so dass Hydraulikflüssigkeit zu dem Strömungswiderstand 28 gefördert wird.

Das 2/2-Wegeventil 32 ist mit der Steuereinheit 16 (Fig. 1) verbunden. Die Steuereinheit 16 ist dazu eingerichtet, den Strömungswiderstand 28 in Abhängigkeit von einem oder mehreren erfassten Kennwerten zu aktivieren oder zu deaktivieren. Insbesondere ist die Steuereinheit 16 dazu eingerichtet, entsprechende Signale bereitzustellen, so dass das Ventil 32 von seiner ersten Stellung (Grundstellung) in seine zweite Stellung (Sperrstellung) umgeschaltet wird. Wie bereits einleitend erläutert, können von der Steuereinheit 16 zu berücksichtigende Kennwerte beispielsweise sein: ein vom Betrieb der Brennkraftmaschine 12 abhängiger Kraftmaschinenparameter oder/und ein vom Betrieb des Hydraulikkreislaufs 22 abhängiger Kreislaufparameter oder/und ein allgemeiner Betriebsparameter, der unabhängig vom Betrieb der Brennkraftmaschine 12 oder des Hydraulikkreislaufs 22 erfassbar ist.

Durch den aktivierten Strömungswiderstand 28 erfolgt im Hydraulikkreis 22 eine Lastaufschaltung. Die Hydraulikpumpe 14 (z.B. Zahnradpumpe oder Verstellpumpe) wird üblicherweise direkt durch die Brennkraftmaschine 12 (den Dieselmotor) angetrieben und das Hydrauliköl wird mit geringem Gegendruck im Hydraulickreis 22 gepumpt. Bei Aktivierung des Strömungswiderstands 28 mittels des Ventils 32 wird die gesamte Hydraulikölmenge über die Blende 28 geleitet. Hierdurch wird der Leitungsquerschnitt sprungartig verengt. Durch die Blende 28 hat die Hydraulikpumpe 14 einen größeren Widerstand zu überwinden, also einen erhöhten Gegendruck. Entsprechend muss die Brennkraftmaschine 12 (Dieselmotor) mehr Leistung erzeugen. Dies hat zur Folge, dass die Brennkraftmaschine 12 (Dieselmotor) schneller warm wird und mehr Wärmeeintrag in das Kühlwasser erzeugt. Ferner wird der hydraulische Leistungsverlust vom Hydrauliköl in Form einer Temperaturerhöhung gespeichert.

Das Anordnen eines Strömungswiderstands 28 im Hydraulikkreislauf 22 des Arbeitsfahrzeugs 10 stellt ein einfaches System dar, bei dem auf zusätzliche Elektroheizungen verzichtet werden kann. Ferner kann ein kombiniertes Erwärmen des Kühlflüssigkeitskreislaufs der Brennkraftmaschine 12 und des Hydraulikölkreislaufs 22 erreicht werden. Dabei kann der Wärmeeintrag in die Kühlflüssigkeit für die Kabinenheizung herangezogen werden, so dass keine zusätzliche Wärmequelle mehr notwendig ist. Der Strömungswiderstand 28 kann auch dann aktiviert werden, wenn der Dieselmotor auf eine Betriebstemperatur gebracht werden muss, die notwendig ist, um bei hohen Abgastemperaturen die Regeneration eines Dieselpartikelfilters durchzuführen. Dabei verringert eine verbesserte Regeneration das Verstopfen bzw. den Ausfall des Dieselpartikelfilters.

Bei dem hier vorgestellten Arbeitsfahrzeug 10 wird also durch den gesteuerten Einsatz (Aktivierung) eines Strömungswiderstand der Kraftstoffverbrauch gezielt etwas erhöht, um einerseits die Kühlflüssigkeit und das Hydrauliköl zu erwärmen und um andererseits eine verbesserte Abgasreinigung zu ermöglichen.

## Patentansprüche

1. Arbeitsfahrzeug mit
einer Brennkraftmaschine (12) zum Antreiben des Arbeitsfahrzeugs (10),
einem Hydraulikkreislauf (22) mit einer Hydraulikpumpe (14), wobei die Hydraulikpumpe (14) mit der Brennkraftmaschine (12) koppelbar oder gekoppelt ist, so dass die Hydraulikpumpe (14) durch die Brennkraftmaschine (12) angetrieben ist, und mit
einer hydraulisch angetriebenen Arbeitsvorrichtung (18, 20), die mit dem Hydraulikkreislauf (22) mittels einer Arbeitsventilanordnung (26) verbunden ist, wobei
in dem Hydraulikkreislauf (22) ein bedarfsweise aktivierbarer Strömungswiderstand (28) angeordnet ist, und wobei
der Strömungswiderstand (28) stromabwärts oder stromaufwärts von der Arbeitsventilanordnung (26) angeordnet ist,
**dadurch gekennzeichnet, dass** der Strömungswiderstand (28) als Blende mit einem festen Durchmesser ausgeführt ist, wobei der Durchmesser geringer ist als der Durchmesser von stromaufwärts und stromabwärts angeordneten Hydraulikleitungen (30), und dass
in dem Hydraulikkreislauf (22) ein 2/2-Wegeventil (32) angeordnet ist, das in seiner ersten Schaltstellung die Hydraulikflüssigkeit an dem Strömungswiderstand (28) vorbei leitet und das in seiner zweiten Schaltstellung die Hydraulikflüssigkeit zum Strömungswiderstand (28) leitet.

2. Arbeitsfahrzeug nach Anspruch 1, wobei das 2/2-Wegeventil (32) ein elektromagnetisch betätigbares Ventil ist, das in seine erste Schaltstellung federvorgespannt ist.

3. Arbeitsfahrzeug nach einem der vorhergehenden Ansprüche, mit einer Steuereinheit (16), die dazu eingerichtet ist, in Abhängigkeit von einem oder mehreren erfassten Kennwerten den Strömungswiderstand (28) zu aktivieren oder zu deaktivieren.

4. Arbeitsfahrzeug nach Anspruch 3, wobei ein erster Kennwert ein vom Betrieb der Brennkraftmaschine (12) abhängiger Kraftmaschinenparameter ist.

5. Arbeitsfahrzeug nach Anspruch 3 oder 4, wobei ein zweiter Kennwert ein vom Betrieb des Hydraulikkreislaufs (22) abhängiger Kreislaufparameter ist.

6. Arbeitsfahrzeug nach einem der Ansprüche 3 bis 5, wobei ein dritter Kennwert ein allgemeiner Betriebsparameter ist, der unabhängig vom Betrieb der Brennkraftmaschine (12) oder des Hydraulikkreislaufs (22) erfassbar ist.

7. Arbeitsfahrzeug nach einem der Ansprüche 3 bis 6, wobei die Steuereinheit (16) dazu eingerichtet ist, den Strömungswiderstand (28) zu deaktivieren, wenn das Arbeitsfahrzeug (10) fährt oder/und wenn die Arbeitsvorrichtung (18) in Betrieb ist.

8. Verfahren zum Betreiben eines Arbeitsfahrzeugs (10) nach einem der vorhergehenden Ansprüche, mit folgenden Schritten:
- Erfassen des Fahrzustands des Arbeitsfahrzeugs (10);
- Erfassen des Betriebszustands der Arbeitsvorrichtung (18);
- Erfassen von einem oder mehreren Kennwerten;
- Aktivieren oder Deaktivieren des Strömungswiderstands (28) in Abhängigkeit von dem erfassten Fahrzustand oder/und dem erfassten Betriebszustand oder/und einem erfassten Kennwert.

## Claims

1. Work vehicle comprising
an internal combustion engine (12) for driving the work vehicle (10),
a hydraulic circuit (22) having a hydraulic pump (14), wherein the hydraulic pump (14) can be coupled or is coupled to the internal combustion engine (12) such that the hydraulic pump (14) is driven by the internal combustion engine (12), and comprising
a hydraulically driven work apparatus (18, 20) which is connected to the hydraulic circuit (22) by means of a work valve assembly (26),
wherein
a flow resistor (28) which can be activated as required is arranged in the hydraulic circuit (22), and wherein
the flow resistor (28) is arranged downstream or upstream of the work valve assembly (26),
**characterised in that** the flow resistor (28) is designed as an orifice plate having a fixed diameter, wherein the diameter is smaller than the diameter of hydraulic lines (30) arranged upstream and downstream, and **in that**
a 2-port/2-way valve (32) is arranged in the hydraulic circuit (22), said valve, in its first switching position, guiding the hydraulic fluid past the flow resistor (28) and, in its second switching position, guiding the hydraulic fluid to the flow resistor (28).

2. Work vehicle as claimed in claim 1, wherein the 2-port/2-way valve (32) is a valve which can be actuated electromagnetically and is spring-biased to its first switching position.

3. Work vehicle as claimed in any one of the preceding claims, comprising a control unit (16) which is adapted to activate or deactivate the flow resistor (28) in dependence upon one or more detected characteristic values.

4. Work vehicle as claimed in claim 3, wherein a first characteristic value is an engine parameter which is dependent upon the operation of the internal combustion engine (12).

5. Work vehicle as claimed in claim 3 or 4, wherein a second characteristic value is a circuit parameter which is dependent upon the operation of the hydraulic circuit (22).

6. Work vehicle as claimed in any one of claims 3 to 5, wherein a third characteristic value is a general operating parameter which can be detected independently of the operation of the internal combustion engine (12) or the hydraulic circuit (22).

7. Work vehicle as claimed in any one of claims 3 to 6, wherein the control unit (16) is adapted to deactivate the flow resistor (28) if the work vehicle (10) is travelling or/and if the work apparatus (18) is in operation.

8. Method for operating a work vehicle (10) as claimed in any one of the preceding claims, comprising the steps of:
- detecting the driving state of the work vehicle (10);
- detecting the operating state of the work apparatus (18);
- detecting one or more characteristic values;
- activating or deactivating the flow resistor (28) in dependence upon the detected driving state or/and the detected operating state or/and a detected characteristic value.

## Revendications

1. Véhicule de travail avec
un moteur à combustion interne (12) pour l'entraînement du véhicule de travail (10),
un circuit hydraulique (22) avec une pompe hydraulique (14), dans lequel la pompe hydraulique (14) peut être couplée ou est couplée avec le moteur à combustion interne (12), de façon à ce que la pompe hydraulique (14) soit entraînée par le moteur à combustion interne (12) et avec
un dispositif de travail (18, 20) entraîné hydrauliquement, qui est relié avec le circuit hydraulique (22) au moyen d'un dispositif de soupape de travail (26), dans lequel
dans le circuit hydraulique (22), est disposée une résistance à l'écoulement (28) pouvant être activée si nécessaire et dans lequel
la résistance à l'écoulement (28) est disposée en aval ou en amont du dispositif de soupape de travail (26),
**caractérisé en ce que** la résistance à l'écoulement (28) est conçu comme un diaphragme avec un diamètre fixe, dans lequel le diamètre est inférieur au diamètre des conduites hydrauliques (30) disposées en amont et en aval et **en ce que**
dans le circuit hydraulique (22) est disposée une soupape 2/2 (32) voies qui, dans sa première position de commutation, détourne le liquide hydraulique de la résistance à l'écoulement (28) et qui, dans sa deuxième position de commutation, conduit le liquide hydraulique vers la résistance à l'écoulement (28).

2. Véhicule de travail selon la revendication 1, dans lequel la soupape 2/2 voies (32) est une soupape pouvant être actionnée de manière électromagnétique, qui est précontrainte par un ressort dans sa première position de commutation.

3. Véhicule de travail selon l'une des revendications précédentes, avec une unité de commande (16), qui est conçue pour activer ou désactiver la résistance à l'écoulement (28) en fonction d'une ou plusieurs valeurs caractéristiques mesurées.

4. Véhicule de travail selon la revendication 3, dans lequel une première valeur caractéristique est un paramètre de moteur à combustion dépendant du fonctionnement du moteur à combustion (12).

5. Véhicule de travail selon la revendication 3 ou 4, dans lequel une deuxième valeur caractéristique est un paramètre de circuit dépendant du fonctionnement du circuit hydraulique (22).

6. Véhicule de travail selon l'une des revendications 3 à 5, dans lequel une troisième valeur caractéristique est un paramètre de fonctionnement général qui peut être mesuré indépendamment du fonctionnement du moteur à combustion interne (12) ou du circuit hydraulique (22).

7. Véhicule de travail selon l'une des revendications 3 à 6, dans lequel l'unité de commande (16) est conçue pour désactiver la résistance à l'écoulement (28) lorsque le véhicule de travail (10) se déplace et/ou lorsque le dispositif de travail (18) est en fonctionnement.

8. Procédé de fonctionnement d'un véhicule de travail (10) selon l'une des revendications précédentes, avec les étapes suivantes :
- détection de l'état de déplacement du véhicule de travail (10) ;
- détection de l'état de fonctionnement du dispositif de travail (18) ;
- détection d'une ou plusieurs valeurs caractéristiques ;
- activation ou désactivation de la résistance à l'écoulement (28) en fonction de l'état de déplacement détecté et/ou de l'état de fonctionnement détecté et/ou d'une valeur caractéristique détectée.
